# EUROPÄISCHE PATENTSCHRIFT

(11) **EP 4 163 220 B1**
(45) Veröffentlichungstag und Bekanntmachung des Hinweises auf die Patenterteilung: **30.07.2025**
(21) Anmeldenummer: 22200292.5
(22) Anmeldetag: 07.10.2022
(51) Int. Cl.: B65D 19/40, B65D 81/05, B60P 7/06

(54) **LAGER- UND TRANSPORTELEMENT, ZUGEHÖRIGES SYSTEM UND VERWENDUNG EINES LAGER- UND TRANSPORTELEMENTS**
STORAGE AND TRANSPORT ELEMENT, ASSOCIATED SYSTEM AND USE OF A STORAGE AND TRANSPORT ELEMENT
ÉLÉMENT DE STOCKAGE ET DE TRANSPORT, SYSTÈME ASSOCIÉ ET UTILISATION D'UN ÉLÉMENT DE STOCKAGE ET DE TRANSPORT

(30) Priorität: 11.10.2021 DE 102021126308
(43) Veröffentlichungstag der Anmeldung: 12.04.2023
(73) Patentinhaber: Klümper, Thomas, 48599 Gronau-Epe (DE)
(72) Erfinder: Klümper, Thomas, 48599 Gronau-Epe (DE)
(74) Vertreter: Michalski Hüttermann & Partner Patentanwälte mbB

(56) Entgegenhaltungen:
- AU-A- 5 045 979
- AU-A- 5 046 079
- US-A- 2 907 580
- US-A- 2 918 183
- US-A- 3 276 530
- US-A- 3 948 344

## Beschreibung

Die vorliegende Erfindung betrifft ein Lager- und Transportelement. Die vorliegende Erfindung betrifft insbesondere ein Lager- und Transportelement, welches zu lagerndes und/oder zu transportierendes Gut besonders vorteilhaft Lagern kann oder beim Transportieren des Guts verwendet werden kann.

Es ist bekannt, dass Güter, wie beispielsweise Schwerlastgüter, gelagert werden müssen. Darüber hinaus ist auch der Transport von derartigen Gütern oftmals anspruchsvoll. Insbesondere, da die zur Verfügung stehende Grundfläche für eine Lagerung oder einen Transport oftmals begrenzt ist, müssen die Güter entsprechend hoch gestapelt werden. Hierzu sind beispielsweise Paletten bekannt, auf welchen das Gut positioniert werden kann.

DE 78 32 817 beschreibt eine Holzpalette zum Lagern und Transportieren von Gütern, insbesondere von Sackgut, bestehend aus einer Tragfläche mit an der Unterseite der Tragfläche angeordneten Gleitmitteln zum Verschieben der Palette auf dem Boden. Die Palette als solche soll beispielsweis aus Sperrholz gefertigt sein und die Gleitmittel können etwa als rechteckige Klötze aus Pressspan geformt sein.

DE 71 40 340 U beschreibt eine Transportpalette, die zum Transport von unverpackten, formsteifen oder in formsteifen oder formweichen Verpackungen gefüllten verformbaren oder schüttfähigen Gütern geeignet ist, deren formsteife oder formweiche Unterseite eine großflächige, ebene Auflagefläche aufweist oder annehmen kann. Die Aufnahmefläche der Palette ist im Wesentlichen von einer nicht-starren, dünnen Platte geringer Formsteifigkeit gebildet, auf deren Unterfläche mindestens vier Auflageblöcke in gleichmäßiger Anordnung vorgesehen sind. Die Anordnung soll dabei der örtlichen Verteilung der Druckbelastung des Transportgutes auf die nicht-starre Gutaufnahmefläche angepasst sein.

AU 50459 79 A beschreibt sowohl palettenlose als auch palettierte umhüllte Ladung, die zum vereinfachten Verlagern auf einem Luftkissen angeordnet ist.

US 2 918 183 A beschreibt eine Palette mit einer starren Oberfläche, welche auf einem mehrschichtigen Unterbau mit einer komprimierbaren mittleren Schicht angeordnet ist, wobei Druckluft durch die Palette auf deren Unterseite geleitet werden kann.

Der Stand der Technik bietet jedoch noch weiteres Verbesserungspotential, insbesondere hinsichtlich der Lagerung und/oder hinsichtlich des Transports von Gütern.

Es ist somit die Aufgabe der vorliegenden Erfindung wenigstens einen Nachteil des Stands der Technik zumindest teilweise zu überwinden. Es ist insbesondere die Aufgabe der vorliegenden Erfindung, den Transport und/oder das Lagern von Gütern zu verbessern.

Diese Aufgabe wird zumindest zum Teil gelöst durch Lager- und Transportelemente mit den Merkmalen des Anspruchs 1. Diese Aufgabe wird ferner gelöst durch ein System mit den Merkmalen des Anspruchs 10, durch eine Verwendung mit den Merkmalen des Anspruchs 11, und durch eine Verwendung mit den Merkmalen des Anspruchs 12. Bevorzugte Ausgestaltungen der Erfindung sind in den Unteransprüchen, in der Beschreibung oder den Figuren beschrieben bzw. gezeigt.

Beschrieben wird ein Lager- und Transportelement zum Lagern oder Transportieren von Gütern, wobei das Lager- und Transportelement eine Grundfläche von wenigstens 0,2 m² aufweist und entlang seiner Dicke einen ersten Bereich und einen zweiten Bereich aufweist, wobei der erste Bereich eine Oberseite des Lager- und Transportelements ausbildet und einen formstabilen Kraftaufnahmebereich bei einer Tragkraft des Lager- und Transportelements in einem Bereich von > 250 kg zum Aufnehmen einer Funktionskraft aufweist, wobei die Funktionskraft die Gewichtskraft von zu transportierendem Gut umfasst, und wobei der Kraftaufnahmebereich eine Lager- und Transportpalette aufweist und ferner eine Kontaktoberfläche aufweist, um unmittelbar mit dem zu lagernden oder dem zu transportierenden Gut in Kontakt zu kommen, wobei der zweite Bereich einen formflexiblen Ausgleichsbereich aufweist, der ein sackartiges Ausgleichselement mit einer granularen Füllung aufweist, um dem Angleichen des Ausgleichsbereichs an die Form einer mit dem Ausgleichsbereich in Kontakt stehenden Oberfläche zu dienen und wobei der zweite Bereich als unterer Bereich des Lager- und Transportelements ausgebildet ist.

Durch ein vorstehend beschriebenes Lager- und Transportelement kann sowohl das Lagern als auch der Transport von Gütern gegenüber den Lösungen aus dem Stand der Technik deutlich verbessert werden.

Das hier beschriebene Lager- und Transportelement kann somit gleichermaßen dem Lagern wie auch dem Transport von Gütern dienen und bei der jeweiligen Verwendung Vorteile bieten. Die Begriffe "Lagern" und "Transport" sind dabei im Sinne der vorliegenden Erfindung weit zu verstehen, so dass eine Anwendung des Lager- und Transportelements beispielsweise als Unterlage für zu lagerndes Gut oder auch für eine Ladungssicherung bei einem Transport dienen kann, wie dies nachstehend in größerem Detail beschrieben ist.

Das Lager- und Transportelement ist dabei wie folgt aufgebaut.

Das Lager- und Transportelement weist eine Grundfläche von wenigstens 0,2 m², beispielsweise von wenigstens 0,51 m², etwa von wenigstens 0,8 m², auf. Dadurch kann ein einziges Lager- und Transportelement auf vorteilhafte Weise für eine für gewerbliche Anwendungen ausreichende Menge an Gütern geeignet sein hinsichtlich einer Anwendung bei einer Lagerung oder einem Transport. Beispielsweise kann die Grundfläche des Lager- und Transportelements in einem Bereich liegen von ≤ 10 m², etwa ≤ 5 m², beispielsweise ≤ 3 m², wie etwa ≤ 1,5 m².

Das Lager- und Transportelement weist ferner entlang seiner Dicke einen ersten Bereich und einen zweiten Bereich auf. Der erste Bereich ist von dem zweiten Bereich verschieden, wobei bevorzugt keine Überlappung vorliegt. Es ist jedoch ebenfalls von der vorliegenden Erfindung umfasst, dass ein gewisser Überlappungsbereich zwischen dem ersten Bereich und dem zweiten Bereich vorliegt.

Der erste Bereich ist dabei insbesondere in einer Anwendung als Lagerelement der obere Bereich. Entsprechend ist der zweite Bereiche insbesondere in einer Anwendung als Lagerelement der untere Bereich. Dabei sei erwähnt, dass das Transport- oder Lagerelement zusätzlich zu dem ersten Bereich und dem zweiten Bereich wenigstens einen weiteren Bereich oder auch mehrere weitere Bereiche aufweisen kann, ohne den Rahmen der vorliegenden Erfindung zu verlassen. Bevorzugt kann jedoch das Lager- und Transportelement entlang seiner Dicke nur den ersten Bereich und den zweiten Bereich aufweisen, also aus dem ersten Bereich und dem zweiten Bereich bestehen.

Der erste Bereich weist einen Kraftaufnahmebereich zum Aufnehmen einer Funktionskraft auf, ist beispielsweise nur durch den Kraftaufnahmebereich gebildet. Der Kraftaufnahmebereich weist eine Kontaktoberfläche auf, welche unmittelbar mit dem zu lagernden oder dem zu transportierenden Gut in Kontakt kommt. Der Kraftaufnahmebereich ist formstabil, was insbesondere bedeutet, dass der Kraftaufnahmebereich inklusive der Kontaktoberfläche sich bei einer gewünschten Verwendung nicht verformt. Entsprechend kann der Kraftaufnahmebereich beziehungsweise kann die Kontaktoberfläche auch als starr bezeichnet werden.

Eine derartige Starrheit liegt zweckmäßig innerhalb der Tragkraft des Lager- und Transportelements vor. Diesbezüglich ist es für ein besonders breites Anwendungsgebiet von Vorteil, dass das Lager- und Transportelement eine Tragkraft in einem Bereich von ≥ 250 kg, beispielsweise von ≥ 750 kg, etwa von ≥ 1500 kg aufweist. Damit soll gemeint sein, dass das Lager- und Transportelement beispielsweise bei einer Lageranwendung mit Gütern mit einem Gewicht belastet werden kann, welches in dem vorstehend beschriebenen Bereich liegt, ohne dass eine Beschädigung auftritt und ohne das Auftreten einer Einschränkung in der Verwendbarkeit. Eine Obergrenze der Belastbarkeit kann etwa in einem Bereich liegen von beispielsweise 2100 kg, etwa von 2500 kg, beispielsweise von 3000 kg, ohne jedoch darauf beschränkt zu sein. Grundsätzlich kann eine Obergrenze selbstredend auch höher liegen.

Unter einer Funktionskraft kann ferner jegliche Kraft verstanden werden, welche bei einer bestimmungsgemäßen Benutzung des Lager- und Transportelements auftritt. Beispielsweise kann die Funktionskraft die Gewichtskraft des zu transportierenden Guts sein.

Der zweite Bereich weist einen formflexiblen Ausgleichsbereich auf, der in Verwendung des Lager- und Transportelements dem Angleichen des Ausgleichsbereichs an die Form einer mit dem Ausgleichsbereich in Kontakt stehenden Oberfläche dient. Beispielsweise ist der zweite Bereich nur aus dem Ausgleichsbereich ausgebildet und besteht somit aus diesem. Somit ist der zweite Bereich im Gegensatz zu dem ersten Bereich gerade nicht starr sondern formflexibel und kann sich an eine den zweiten Bereich kontaktierende Oberfläche anpassen und somit die Form der den zweiten Bereich kontaktierenden Oberfläche annehmen. Dies soll dabei insbesondere möglich sein bei einer Verwendung des Lager- und Transportelements zum Lagern oder zum Transport von Gütern, wie dies an anderer Stelle in größerem Detail beschrieben ist.

Grundsätzlich kann eine Formflexibilität dabei durch eine elastische oder plastische Verformbarkeit des zweiten Bereichs ermöglicht werden, ohne den Bereich der vorliegenden Erfindung zu verlassen.

Die erfindungsgemäße Kombination des ersten und des zweiten Bereichs kann gegenüber Lösungen aus dem Stand der Technik deutliche Vorteile aufweisen.

Für eine beispielhafte Anwendung eines Lagerns kann das Lager- und Transportelement beispielsweise als Unterlage dienen, auf welchem das zu lagernde Gut angeordnet wird.

Durch den ersten Bereich kann das Gut sicher beispielsweise gestapelt werden, wie dies auch für Lager- und Transportelemente aus dem Stand der Technik bekannt ist, indem die Gewichtskraft durch den Kraftaufnahmebereich getragen werden kann. Entsprechend kann der erste Bereich nach oben gerichtet sein und die Oberseite des Lager- und Transportelements ausbilden.

Beispielsweise kann der erste Bereich eine herkömmliche Palette, wie etwa eine sogenannte Europalette, aufweisen, wie etwa daraus bestehen, oder durch ein Element, welches in Form und/oder Größe und/oder Aufbau zu einer entsprechenden Palette ähnlich ist, ohne jedoch hierauf beschränkt zu sein.

Dadurch, dass das Lager- und Transportelement jedoch zusätzlich zu dem ersten Bereich den vorstehend beschriebenen zweiten Bereich aufweist, kann sich die Unterseite des Lager- und Transportelements an den Untergrund anschmiegen selbst dann, wenn der Untergrund uneben ist. Dies kann beispielsweise der Fall sein, wenn das Lager- und Transportelement auf einem unebenen Boden abgestellt wird. Darüber hinaus kann dies ebenfalls auftreten, wenn mehrere Transport- und Lagerelemente mitsamt dem zu lagernden Gut übereinander gestapelt werden. Denn wenn das Gut beispielsweise Sackware ist oder auch ansonsten keine ebene Oberfläche ausbildet, kann dennoch der zweite Bereich des oberen Lager- und Transportelements wiederum sich an den Untergrund anschmiegen.

Durch die vorbeschriebene Formflexibilität des zweiten Bereichs kann somit eine besonders große Kontaktoberfläche zwischen der Unterseite des Lager- und Transportelements und dem Untergrund, auf dem dieses angeordnet ist, bereitgestellt werden.

Eine Verformung des zweiten Bereichs an die jeweilige Unterlage kann dadurch signifikante Vorteile aufweisen. Denn wenn beispielsweise eine starre Kontaktfläche anstatt des zweiten Bereichs vorläge, kann der Halt des Lager- und Transportelements begrenzt sein, was somit zu einer reduzierten Standsicherheit führt. Dies bereits deshalb, da Kontakt zwischen dem Lager- und Transportelement und dem Untergrund nur auf wenige Kontaktpunkte begrenzt sein kann. Dies gilt es selbstredend zu vermeiden. Durch das Vorsehen des zweiten Bereichs und die damit einhergehende Vergrößerung der Kontaktoberfläche kann eine deutlich erhöhte Stabilität ermöglicht werden, so dass die Gefahr für ein Verrutschen, beispielsweise, deutlich reduziert werden kann.

Darüber hinaus wird es durch das Vorsehen des zweiten Bereichs möglich, den ersten Bereich beziehungsweise die Oberseite des ersten Bereichs in einer horizontalen Ebene auszurichten. Dadurch wird auch die Gefahr, dass auf dem Lager- und Transportelement sich befindliches Gut verrutschen kann, deutlich reduziert.

Dem Vorstehenden folgend kann somit die Standsicherheit sowohl des Lager- und Transportelements als solchem, als auch des hierauf befindlichen Guts verbessert werden.

Weiterhin bietet sich der Vorteil, dass eine Vergleichmäßigung der Krafteinwirkung zwischen dem zweiten Bereich und dem Untergrund, auf dem das Lager- und Transportelement sich befindet, ermöglicht wird. In anderen Worten kann eine Gewichtsverteilung erreicht werden, so dass das Gewicht sehr homogen auf den Untergrund wirken kann. Dadurch kann der Untergrund geschont werden, was insbesondere für empfindliche Untergründe, wie etwa empfindliche Böden, von Vorteil sein kann. Besonders vorteilhaft kann dieser Effekt jedoch hervortreten, wenn, wie vorstehend beschrieben, das Lager- und Transportelement auf zu lagerndem Gut positioniert wird, etwa um Lagerfläche zu sparen, da in diesem Fall das zu lagernde Gut geschützt wird.

Die vorstehend beschriebenen Vorteile zeigen sich dabei gleichermaßen bei einem Lagern der Güter, etwa in einer Lagerhalle, oder auch bei einem Transport von Gütern, bei dem das Lager- und Transportelement beispielsweise in einem Lastkraftwagen zum Transport der Güter verwendet wird.

Vorteile des erfindungsgemäßen Lager- und Transportelements zeigen sich jedoch auch in weiteren Transportanwendungen. Beispielsweise kann das Lager- und Transportelement zur Transportsicherung verwendet werden. Hierzu kann das Lager- und Transportelement beispielsweise in einer vertikalen Ausrichtung verwendet werden, wobei sich der zweite Bereich an die zu sichernde Ladung beziehungsweise an das zu sichernde Gut anschmiegen kann. Der erste Bereich kann beispielsweise die Befestigungskraft eines Spanngurtes als Funktionskraft aufnehmen, welcher dann das Lager- und Transportelement gegen das zu sichernde Gut presst und dieses so sichert. Durch den zweiten Bereich kann das zu sichernde Gut jedoch geschont werden, so dass die Gefahr von Beschädigungen durch eine Ladungssicherung deutlich reduziert werden kann.

Aus dem Vorstehenden resultiert somit eine besonders breite Anwendbarkeit des Lager- und Transportelements sowohl bei einem Einsatz zum Lagern von Gütern, etwa als Unterlage für zu lagerndes Gut, als auch zum Transport von Gütern, etwa ebenfalls als Unterlage für das Gut oder auch zwecks einer Ladungssicherung.

Darüber hinaus ist ein erfindungsgemäßes Lager- und Transportelement einfach herstellbar, indem etwa an einen ersten Bereich, der wie vorstehend durch eine handelsübliche Palette gebildet sein kann, ein zweiter Bereich angeordnet wird. Entsprechend ist auch eine Nachrüstung bestehender Produkte, etwa Paletten, problemlos möglich.

Grundsätzlich kann es ferner vorgesehen sein, dass insbesondere der zweite Bereich ein einzelner zusammenhängender Bereich ist, oder in der Ebene der Grundfläche durch eine Mehrzahl an Unterbereichen, wie etwa durch eine Mehrzahl an Ausgleichselementen, ausgebildet wird.

Erfindungsgemäß weist der Ausgleichsbereich wenigstens ein sackartiges Ausgleichselement auf, das eine granulare Füllung enthält.

Dadurch kann konstruktiv einfach eine Formflexibilität ermöglicht werden, welche die vorbeschriebenen Vorteile sicher ermöglichen kann. Darüber hinaus können die vorbeschriebenen Tragkräfte ermöglicht werden, was die breite Anwendbarkeit des Lager- und Transportelements ermöglicht. Schließlich kann durch die Menge und Art der Füllung des auch als kissenartig zu bezeichnenden sackartigen Ausgleichselements eine vorteilhafte Verformbarkeit an die gewünschte Traglast beziehungsweise an die zu erwartenden Funktionskräfte angepasst werden, was die Anpassungsfähigkeit an das gewünschte Anwendungsgebiet weiter verbessern kann. Entsprechend kann es von Vorteil sein, wenn das sackartige Ausgleichselement eine verschließbare Einfüllöffnung aufweist, durch welche Material der granularen Füllung entnommen oder hinzugefügt werden kann.

Hinsichtlich der granularen Füllung kann es bevorzugt sein, dass diese ausgewählt ist aus Sand, Kunststoffgranulen, wie etwa Polystyrolgranulen, oder Hobelspäne, insbesondere aus Holz. Derartige Materialien sind auch bei hohen Belastungen sehr stabil und können somit auch bei mehrfacher Verwendung ihre Wirkung beibehalten. Darüber hinaus sind derartige granulare Füllungen kostengünstig erhältlich.

Es kann weiterhin bevorzugt sein, dass das sackartige Ausgleichselement ein Gewebematerial aufweist. Beispielsweise kann das Ausgleichselement, wie etwa seine Außenhaut, aus einem Kunststoffgewebe, wie etwa einem Polyethylengewebe, ausgebildet sein, das beidseitig mit einem Kunststoff, wie etwa mit Polyvinylchlorid (PVC) beschichtet sein kann. Ein derartiges Material ist etwa als Material für LKW-Planen bekannt und bietet beispielsweise den Vorteil einer hohen Langzeitstabilität auch bei hohen Belastungen.

Weiterhin kann es bevorzugt sein, dass das sackartige Ausgleichselement in eine Mehrzahl von Kammern unterteilt ist. Dadurch kann es verhindert werden, dass, etwa bei einem Anheben des Lager- und Transportelements, die granulare Füllung in die Mitte fließt und bei einer anschließenden Anwendung die Verformbarkeit beeinflusst. Die Kammern können etwa durch das Material der Außenhaut oder ein anderes Material ausgebildet werden, welche im Inneren des Ausgleichselements eine Trennstruktur unter Ausbildung einer Mehrzahl von wenigstens zwei Kammern ausbilden.

Es kann weiterhin bevorzugt sein, dass der zweite Bereich wenigstens eine Ausdehnung in der Ebene der Grundfläche von 80% der Grundfläche des ersten Bereichs aufweist. Durch eine derartige Ausdehnung beziehungsweise Größe des zweiten Bereichs können die vorstehend beschriebenen Vorteile besonders sicher bereitgestellt werden. Denn bei einer zu geringen Größe des zweiten Bereichs kann gegebenenfalls nicht immer sicher verhindert werden, dass der erste Bereich mit dem unter dem Lager- und Transportelement befindlichen Untergrund in Kontakt kommt. Dadurch könnte den Vorteilen der vorliegenden Erfindung zumindest zum Teil entgegengewirkt werden, was in dieser Ausgestaltung gerade verhindert werden kann.

Weiter bevorzugt kann der zweite Bereich eine Dicke aufweisen von ≥ 5cm, etwa ≥ 15 cm, bevorzugt von ≥ 25 cm. Insbesondere derartige Dicken des zweiten Bereichs beziehungsweise des Ausgleichselements oder der Ausgleichselemente können auch bei hohen Belastungen beziehungsweise bei hohen Traglasten sicherstellen, dass eine ausreichende Verformbarkeit des zweiten Bereichs möglich ist, um sich an die den zweiten Bereich kontaktierende Oberfläche sicherzustellen. Somit kann auch diese Ausgestaltung für eine sehr breite Anwendbarkeit unabhängig von der spezifischen Traglast dienen. Darüber hinaus können auch sehr unebene Untergründe ausgeglichen werden, was hinsichtlich der Anwendbarkeit weitere Vorteile mit sich bringen kann.

Es kann weiterhin bevorzugt sein, dass der zweite Bereich an dem ersten Bereich fixiert ist durch eine unlösbare Verbindung. In dieser Ausgestaltung kann das Verwenden des Lager- und Transportelements vereinfacht werden, da die Gefahr eines Ablösens des zweiten Bereichs von dem ersten Bereich während des Betriebs deutlich verhindert werden kann. Dadurch kann die Funktionsfähigkeit des Lager- und Transportelements sichergestellt beziehungsweise eine Fehlfunktion vermieden werden. Unter einer unlösbaren Verbindung soll dabei im Sinne der vorliegenden Erfindung insbesondere verstanden werden eine Verbindung, welche nicht gelöst werden kann, ohne eine zumindest lokale Beschädigung eines Elements des Lager- und Transportelements hervorzurufen. Beispiele für eine unlösbare Verbindung umfassen beispielsweise eine Verschraubung, eine Vernietung, eine Verklebung und/oder eine Verschweißung.

Weiter bevorzugt kann benachbart zu dem zweiten Bereich eine Begrenzungsfläche vorgesehen sein, welche den zweiten Bereich zu dem ersten Bereich begrenzt und welche wenigstens 80% der Grundfläche des zweiten Bereichs ausmacht, wobei das Ausgleichselement des zweiten Bereichs an der Begrenzungsfläche anliegt. In dieser Ausgestaltung kann es erlaubt werden, dass die Eigenschaften des zweiten Bereichs hinsichtlich einer Verformbarkeit besonders definiert sind. Denn da sich das Ausgleichselement oder die Ausgleichselemente an der Begrenzungsfläche abstützen können, kann eine Verformung in Richtung des ersten Bereichs verhindert werden. Dadurch kann sich der zweite Bereich an die mit ihm in Kontakt kommende Oberfläche angleichen, was ein Anschmiegen an die entsprechende Oberfläche besonders effektiv und definiert gestalten kann.

Hinsichtlich weiterer Vorteile und technischer Merkmale des Lager- und Transportelements wird auf die Ausführungen betreffend das System, die Verwendungen, die Figuren und die Beispiele verwiesen und umgekehrt.

Beschrieben wird ferner ein System aus wenigstens zwei Lager- und Transportelementen, wobei wenigstens zwei Lager- und Transportelemente in einer vertikalen Ebene übereinander angeordnet sind derart, dass ein erstes, unteres Lager- und Transportelement zu lagerndes oder zu transportierendes Gut trägt, und wobei das zweite Lager- und Transportelement auf dem zu transportierenden Gut angeordnet ist, wobei zumindest das zweite Lager- und Transportelement ausgebildet ist wie vorstehend beschrieben.

In diesem System wird somit das erfindungsgemäße Lager- und Transportelement zumindest als oberes Lager- und Transportelement verwendet. Die vorstehend beschriebenen Vorteile werden somit dadurch erzielt, dass das Lager- und Transportelement auf Gut gestellt wird, welches bereits auf einem weiteren Lager- und Transportelement vorliegt. Das untere Lager- und Transportelement kann zu dem erfindungsgemäßen Lager- und Transportelement gleich oder verschieden sein. Durch den zweiten Bereich kann somit die Unterseite des Lager- und Transportelements sich an das gelagerte Gut angepasst werden und dieses somit schonen. Dadurch kann auch empfindliches Gut vergleichsweise hoch gestapelt werden, etwa bei einer Lagerung oder bei einem Transport auch auf dem zweiten Lager- und Transportelement. Darüber hinaus kann beispielsweise ein Spanngurt oder eine andere Sicherung um die Lager- und Transportelemente geführt werden und etwa an dem Kraftaufnahmebereich des zweiten Lager- und Transportelements anliegen, ohne eine übermäßige Kraft auf das zu lagernde oder zu transportierende Gut auszuüben.

Hinsichtlich weiterer Vorteile und technischer Merkmale des Systems wird auf die Ausführungen betreffend das Lager- und Transportelement, die Verwendungen, die Figuren und die Beispiele verwiesen und umgekehrt.

Dem Vorstehenden folgend gibt es insbesondere zwei exemplarische Verwendungen für das erfindungsgemäße das Lager- und Transportelement, wobei die vorliegende Erfindung in keiner Weise auf diese Verwendungen beschränkt sein soll.

Beschrieben wird zunächst die Verwendung eines zuvor beschriebenen Lager- und Transportelements als Unterlage für zu lagerndes oder zu transportierendes Gut. In dieser Verwendung kann das Lager- und Transportelement in einer horizontalen Anordnung verwendet werden.

Beschrieben wird weiterhin die Verwendung eines zuvor beschriebenen Lager- und Transportelements als Ladungssicherung für zu transportierendes Gut. In dieser Verwendung kann das Lager- und Transportelement in einer vertikalen Anordnung verwendet werden. Dabei kann sich der Ausgleichsbereich an das zu sichernde Gut anschmiegen und ein Transportgurt kann um das Lager- und Transportelement geführt werden und etwa an dem Kraftaufnahmebereich des Lager- und Transportelements anliegen, ohne eine übermäßige Kraft auf das zu transportierende Gut auszuüben.

Mit Bezug auf die Vorteile und technische Merkmale der Verwendungen wird auf die Ausführungen betreffend das Lager- und Transportelement, des Systems, die Figuren und die Beispiele verwiesen und umgekehrt.

Nachfolgend wird die Erfindung unter Bezugnahme auf die anliegenden Zeichnungen und Beispiele exemplarisch erläutert, wobei die Erfindung nicht auf die folgende Zeichnung, die folgende Beschreibung und das folgende Ausführungsbeispiel beschränkt ist.

Es zeigen:
Fig. 1 eine schematische Ansicht eines erfindungsgemäßen Lager- und Transportelements;
Fig. 2 eine schematische Darstellung eines Systems aufweisend ein erfindungsgemäßes Lager- und Transportelement; und
Fig. 3 ein erfindungsgemäßes Lager- und Transportelement als Transportsicherung.

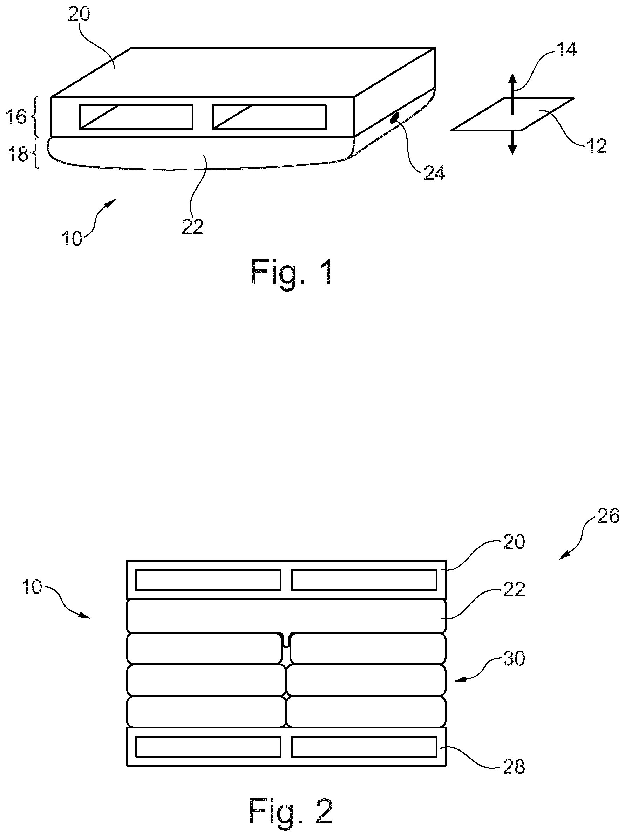

In der Figur 1 ist ein Lager- und Transportelement 10 zum Lagern oder Transportieren von Gütern gemäß einer Ausgestaltung der vorliegenden Erfindung gezeigt. Das Lager- und Transportelement 10 kann gleichermaßen zum Lagern als auch zum Transportieren von Gut verwendet werden.

Das Lager- und Transportelement 10 umfasst eine Grundfläche, welche in der Figur 1 in der Ebene 12 liegt, von wenigstens 0,2 m². Entlang der Dicke des Lager- und Transportelements 10, welche in der Figur 1 durch den Pfeil 14 symbolisiert werden soll, weist dieses einen ersten Bereich 16 und einen zweiten Bereich 18 auf. Der erste Bereich 16 weist einen Kraftaufnahmebereich zum Aufnehmen einer Funktionskraft auf. Dieser ist gemäß Figur 1 durch eine an sich bekannte Lager- und Transportpalette 20 ausgebildet. Weiterhin umfasst der zweite Bereich 18 einen formflexiblen Ausgleichsbereich, der in Verwendung des Lager- und Transportelements 10 dem Angleichen des Ausgleichsbereichs beziehungsweise des Lager- und Transportelements 10 an die Form einer mit dem Ausgleichsbereich in Kontakt stehenden Oberfläche dient. Gemäß Figur 1 ist der Ausgleichsbereich durch ein sackartiges Ausgleichselement 22 gebildet, das eine granulare Füllung enthält. Beispielsweise ist die granulare Füllung ausgewählt aus Sand, Kunststoff, wie etwa Polystyrolgranulen, oder ähnlichen Materialien.

Darüber hinaus ist in der Figur 1 gezeigt, dass das sackartige Ausgleichselement 22 eine verschließbare Einfüllöffnung 24 aufweist. Dadurch kann das Füllmaterial in das Ausgleichselement 22 gefüllt oder aus dem Ausgleichselement 22 entfernt werden.

Es ist ferner angedeutet, dass der zweite Bereich 18 an dem ersten Bereich 16 fixiert ist durch eine unlösbare Verbindung.

Die Figur 2 zeigt ein Lager- und Transportelement 10 in einer Funktion bei einem Lagern oder Transportieren von Gut.

Im Detail ist ein System 26 gezeigt, welches wenigstens zwei Lager- und Transportelemente 10, 28 aufweist. Die zwei Lager- und Transportelemente 10, 28 sind in einer vertikalen Ebene übereinander angeordnet derart, dass ein erstes, unteres Lager- und Transportelement 28 zu lagerndes oder zu transportierendes Gut trägt. Gemäß Figur 2 ist das erste Lager- und Transportelement 28 eine herkömmliche Lager- und Transportpalette und das zu lagernde oder zu transportierende Gut ist insbesondere Sackgut 30, wie etwa Palettenware mit Zementsäcken, Hundefutter, Torf, Rohware, oder auch Lebensmittel, wie etwa Zucker, Mehl Reis oder Ähnliches, um nicht beschränkende Beispiele zu nennen.

Das zweite Lager- und Transportelement 10 ist wie in Figur 1 gezeigt ausgestaltet und ist ferner auf dem Sackgut 30 angeordnet ist. Dabei ist insbesondere gezeigt, dass sich die Unterseite des Lager- und Transportelements 10 beziehungsweise des Ausgleichselements 22 an die Oberfläche des Sackguts 30 anschmiegt. Dadurch kann zum einen eine verbesserte Stabilität wie auch eine Homogenisierung der auf das Sackgut 30 wirkenden Kraft ermöglicht werden. Auf das Lager- und Transportelement 10 kann weiteres Gut gestapelt werden, um das Gut zu lagern oder zu transportieren. Somit kann zusätzliche Lagerfläche geschaffen werden, was sowohl für eine Lagerung, als auch für einen Transport von Vorteil ist, da so die Höhe besser ausgenutzt werden kann und die Lagerfläche reduziert werden kann. Alternativ kann, insbesondere um das Gut zu transportieren, ein Befestigungsmittel, wie etwa ein Spanngurt, um die Lager- und Transportelemente 10, 28 gespannt werden, wobei die auf das Sackgut 30 wirkende Kraft und damit die Gefahr von Beschädigungen minimiert werden kann.

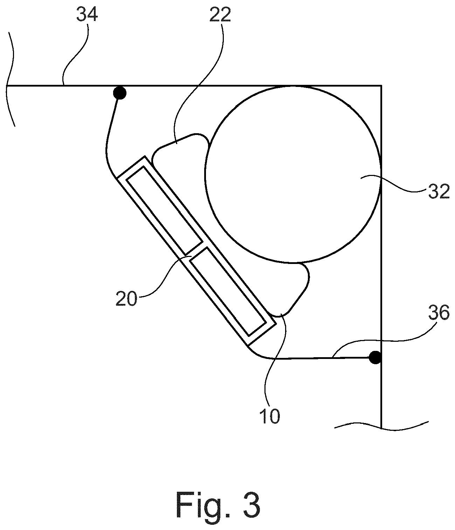

In der Figur 3 ist eine weitere Anwendung des Lager- und Transportelements 10 gezeigt. Gemäß Figur 3 wird das Lager- und Transportelement 10 insbesondere zur Ladungssicherung verwendet. In einer Draufsicht ist gezeigt, wie eine Tonne 32 als zu transportierendes Gut an einer Wandung 34 eines Transportmittels, wie etwa eines Lastkraftwagens, steht. Mittels eines Spanngurtes 36 kann die Tonne 32 fixiert beziehungsweise gesichert werden. Um die auf die Tonne 32 wirkende Kraft und damit die Gefahr von Beschädigungen zu reduzieren, wird das Lager- und Transportelement 10 verwendet. Das Ausgleichselement 22 schmiegt sich an die Tonne 32 an und die Lager- und Transportpalette 20 nimmt die Kraft des Spanngurtes 36 auf.

Es wird somit gezeigt, dass durch die vorliegende Erfindung eine neue, ebene Abstellfläche insbesondere für weiteres Gut geschaffen werden kann, sei es als Stellplatzeinsparung in einem Transportmittel, wie etwa einem LKW, oder in einem Lager. Darüber hinaus kann die Ware geschützt werden und die Stabilität und grundsätzlich die Sicherheit verbessert werden.

### Bezugszeichenliste

- 10: Lager- und Transportelement
- 12: Ebene
- 14: Pfeil
- 16: erster Bereich
- 18: zweiter Bereich
- 20: Lager- und Transportpalette
- 22: Ausgleichselement
- 24: Einfüllöffnung
- 26: System
- 28: Lager- und Transportelement
- 30: Sackgut
- 32: Tonne
- 34: Wandung
- 36: Spanngurt

## Patentansprüche

1. Lager- und Transportelement (10) zum Lagern oder Transportieren von Gütern, wobei das Lager- und Transportelement (10) eine Grundfläche von wenigstens 0,2 m² aufweist und entlang seiner Dicke einen ersten Bereich (16) und einen zweiten Bereich (18) aufweist, wobei der erste Bereich (16) eine Oberseite des Lager- und Transportelements (10) ausbildet und einen formstabilen Kraftaufnahmebereich bei einer Tragkraft des Lager- und Transportelements (10) in einem Bereich von ≥ 250 kg zum Aufnehmen einer Funktionskraft aufweist, wobei die Funktionskraft die Gewichtskraft von zu transportierendem Gut umfasst, und wobei der Kraftaufnahmebereich eine Lager- und Transportpalette (20) aufweist und ferner eine Kontaktoberfläche aufweist, um unmittelbar mit dem zu lagernden oder dem zu transportierenden Gut in Kontakt zu kommen, wobei der zweite Bereich (18) einen formflexiblen Ausgleichsbereich aufweist, der ein sackartiges Ausgleichselement (22) mit einer granularen Füllung aufweist, um dem Angleichen des Ausgleichsbereichs an die Form einer mit dem Ausgleichsbereich in Kontakt stehenden Oberfläche zu dienen und wobei der zweite Bereich (18) als unterer Bereich des Lager- und Transportelements (10) ausgebildet ist.

2. Lager- und Transportelement (10) nach Anspruch 1, wobei das sackartige Ausgleichselement (22) eine verschließbare Einfüllöffnung (24) aufweist.

3. Lager- und Transportelement (10) nach Anspruch 1 oder 2, wobei die granulare Füllung ausgewählt ist aus Sand, Kunststoffgranulen, wie etwa Polystyrolgranulen, und Hobelspänen.

4. Lager- und Transportelement (10) nach einem der Ansprüche 1 bis 3, wobei das sackartige Ausgleichselement (22) ein Gewebematerial aufweist.

5. Lager- und Transportelement (10) nach einem der Ansprüche 1 bis 4, wobei das sackartige Ausgleichselement (22) in eine Mehrzahl von Kammern unterteilt ist.

6. Lager- und Transportelement (10) nach einem der Ansprüche 1 bis 5, wobei der zweite Bereich (18) in der Ebene der Grundfläche eine Ausdehnung von wenigstens 80% der Grundfläche des ersten Bereichs (16) aufweist.

7. Lager- und Transportelement (10) nach einem der Ansprüche 1 bis 6, wobei der zweite Bereich (18) eine Dicke aufweist von ≥ 5 cm.

8. Lager- und Transportelement (10) nach einem der Ansprüche 1 bis 7, wobei der zweite Bereich (18) an dem ersten Bereich (16) fixiert ist durch eine unlösbare Verbindung.

9. Lager- und Transportelement (10) nach einem der Ansprüche 1 bis 8, wobei benachbart zu dem zweiten Bereich (18) eine Begrenzungsfläche vorgesehen ist, welche den zweiten Bereich (18) zu dem ersten Bereich (16) begrenzt und welche wenigstens 80% der Grundfläche des zweiten Bereichs (18) ausmacht, wobei das Ausgleichselement (22) des zweiten Bereichs (18) an der Begrenzungsfläche anliegt.

10. System aus wenigstens zwei Lager- und Transportelementen (10, 28), wobei wenigstens zwei Lager- und Transportelemente (10, 28) in einer vertikalen Ebene übereinander angeordnet sind derart, dass ein erstes, unteres Lager- und Transportelement (28) zu lagerndes oder zu transportierendes Gut trägt, und dass das zweite Lager- und Transportelement (10) auf dem zu transportierenden Gut angeordnet ist, wobei zumindest das zweite Lager- und Transportelement (10) ausgebildet ist nach einem der Ansprüche 1 bis 9.

11. Verwendung eines Lager- und Transportelements (10) nach einem der Ansprüche 1 bis 9 als Unterlage für zu lagerndes oder zu transportierendes Gut.

12. Verwendung eines Lager- und Transportelements (10) nach einem der Ansprüche 1 bis 9 als Ladungssicherung für zu transportierendes Gut.

## Claims

1. A storage and transport element (10) for storing or transporting goods, wherein the storage and transport element (10) has a base area of at least 0.2 m² and has a first region (16) and a second region (18) along its thickness, wherein the first region (16) forms an upper side of the storage and transport element (10) and has a dimensionally stable force-absorbing region with a load-bearing capacity of the storage and transport element (10) in a range of ≥ 250 kg for absorbing a functional force, wherein the functional force comprises the weight force of goods to be transported, and wherein the force-absorbing region comprises a storage and transport pallet (20) and further comprises a contact surface for coming into direct contact with the goods to be stored or transported, wherein the second region (18) comprises a dimensionally flexible compensating region, which has a bag-like compensating element (22) with a granular filling to serve to adapt the compensating area to the shape of a surface in contact with the compensating area, and wherein the second area (18) is designed as the lower area of the storage and transport element (10).

2. The storage and transport element (10) according to claim 1, wherein the bag-like compensating element (22) has a closable filling opening (24).

3. The storage and transport element (10) according to claim 1 or 2, wherein the granular filling is selected from sand, plastic granules, such as polystyrene granules, and wood shavings.

4. The storage and transport element (10) according to one of claims 1 to 3, wherein the bag-like compensating element (22) comprises a fabric material.

5. The storage and transport element (10) according to one of claims 1 to 4, wherein the bag-like compensating element (22) is divided into a plurality of chambers.

6. The storage and transport element (10) according to one of claims 1 to 5, wherein the second region (18) has an extension in the plane of the base area of at least 80% of the base area of the first region (16).

7. The storage and transport element (10) according to one of claims 1 to 6, wherein the second region (18) has a thickness of ≥ 5 cm.

8. The storage and transport element (10) according to one of claims 1 to 7, wherein the second region (18) is fixed to the first region (16) by an inseparable connection.

9. The storage and transport element (10) according to one of claims 1 to 8, wherein a boundary surface is provided adjacent to the second region (18), which delimits the second region (18) from the first region (16) and which comprises at least 80% of the base area of the second region (18), wherein the compensating element (22) of the second region (18) rests against the boundary surface.

10. A system formed from at least two storage and transport elements (10, 28), wherein at least two storage and transport elements (10, 28) are arranged one above the other in a vertical plane such that that a first, lower storage and transport element (28) carries goods to be stored or transported, and that the second storage and transport element (10) is arranged on the goods to be transported, wherein at least the second storage and transport element (10) is formed according to one of claims 1 to 9.

11. Use of a storage and transport element (10) according to one of claims 1 to 9 as a base for goods to be stored or transported.

12. Use of a storage and transport element (10) according to one of claims 1 to 9 as load securing for goods to be transported.

## Revendications

1. Élément de stockage et de transport (10) destiné à stocker ou à transporter des marchandises, l'élément de stockage et de transport (10) présentant une surface de base d'au moins 0,2 m² et présentant, le long de son épaisseur, une première zone (16) et une deuxième zone (18), la première zone (16) réalisant un côté supérieur de l'élément de stockage et de transport (10) et présentant une zone de réception de force indéformable pour une capacité de charge de l'élément de stockage et de transport (10) dans une plage de ≥ 250 kg, destinée à recevoir une force fonctionnelle, la force fonctionnelle comprenant le poids des marchandises à transporter, et la zone de réception de force présentant une palette de stockage et de transport (20) et présentant en outre une surface de contact pour venir en contact direct avec les marchandises à stocker ou à transporter, la deuxième zone (18) présentant une zone de compensation de forme flexible, qui présente un élément de compensation en forme de sac (22) avec un remplissage granulaire, afin de permettre à la zone de compensation de s'adapter à la forme d'une surface en contact avec la zone de compensation, et la deuxième zone (18) étant réalisée sous forme de zone inférieure de l'élément de stockage et de transport (10).

2. Élément de stockage et de transport (10) selon la revendication 1, dans lequel l'élément de compensation en forme de sac (22) présente une ouverture de remplissage (24) pouvant être fermée.

3. Élément de stockage et de transport (10) selon la revendication 1 ou 2, dans lequel le remplissage granulaire est choisi parmi le sable, les granulés de plastique, tels que les granulés de polystyrène, et les copeaux de bois.

4. Élément de stockage et de transport (10) selon l'une quelconque des revendications 1 à 3, dans lequel l'élément de compensation en forme de sac (22) présente un matériau tissé.

5. Élément de stockage et de transport (10) selon l'une quelconque des revendications 1 à 4, dans lequel l'élément de compensation en forme de sac (22) est divisé en une pluralité de chambres.

6. Élément de stockage et de transport (10) selon l'une quelconque des revendications 1 à 5, dans lequel la deuxième zone (18) présente, dans le plan de la surface de base, une extension d'au moins 80 % de la surface de base de la première zone (16).

7. Élément de stockage et de transport (10) selon l'une quelconque des revendications 1 à 6, dans lequel la deuxième zone (18) présente une épaisseur ≥ 5 cm.

8. Élément de stockage et de transport (10) selon l'une quelconque des revendications 1 à 7, dans lequel la deuxième zone (18) est fixée à la première zone (16) par une liaison indétachable.

9. Élément de stockage et de transport (10) selon l'une quelconque des revendications 1 à 8, dans lequel une surface de délimitation est prévue au voisinage de la deuxième zone (18),
laquelle délimite la deuxième zone (18) par rapport à la première zone (16) et représente au moins 80 % de la surface de base de la deuxième zone (18), l'élément de compensation (22) de la deuxième zone (18) étant en appui contre la surface de délimitation.

10. Système composé d'au moins deux éléments de stockage et de transport (10, 28), dans lequel
au moins deux éléments de stockage et de transport (10, 28) sont agencés l'un au-dessus de l'autre dans un plan vertical de telle sorte qu'un premier élément de stockage et de transport inférieur (28) supporte les marchandises à stocker ou à transporter, et que le deuxième élément de stockage et de transport (10) est agencé sur les marchandises à transporter, au moins le deuxième élément de stockage et de transport (10) étant réalisé selon l'une quelconque des revendications 1 à 9.

11. Utilisation d'un élément de stockage et de transport (10) selon l'une quelconque des revendications 1 à 9 en tant que support pour des marchandises à stocker ou à transporter.

12. Utilisation d'un élément de stockage et de transport (10) selon l'une quelconque des revendications 1 à 9 en tant que dispositif de sécurisation de chargement pour des marchandises à transporter.
